Europäisches Patentamt

(19) European Patent Office

Office européen des brevets

(11) Numéro de publication: **0 238 382 B1**

(12) **FASCICULE DE BREVET EUROPEEN**

(45) Date de publication du fascicule du brevet:
01.08.90

(21) Numéro de dépôt: **87400379.1**

(22) Date de dépôt: **20.02.87**

(51) Int. Cl.⁵: **H04N 7/08**

(54) **Dispositif de démultiplexage de paquets d'un signal de radiodiffusion de type MAC/PAQUETS.**

(30) Priorité: **20.02.86 FR 8602318**

(43) Date de publication de la demande:
**23.09.87 Bulletin 87/39**

(45) Mention de la délivrance du brevet:
**01.08.90 Bulletin 90/31**

(84) Etats contractants désignés:
**DE GB IT NL SE**

(56) Documents cités:
**EP-A- 0 019 545**
**EP-A- 0 077 712**

**FERNSEH- UND KINOTECHNIK,
vol. 39, no. 10, octobre 1985, pages 472-480, Heidelberg,
DE; U. MESSERSCHMID: "Fernsehnormen für
Rundfunksatelliten - Das D2-MAC/Paket-Verfahren in
der MAC-Systemfamilie"
EUROPEAN BROADCASTING UNION (EBU) REVIEW
TECHNICAL,
no. 200, août 1983, pages 172-185, Bruxelles, BE; H.
MERTENS et al.: "The C-MAC/packet system for direct
satellite television"**

(73) Titulaire: **ETAT FRANCAIS repr. par le Secrétaire d'Etat
aux Postes & Télécommunications (Centre National
d'Etudes des Télécommunications), 38-40 Rue du
Général Leclerc, F-92131 ISSY LES MOULINEAUX(FR)**
Titulaire: **TELEDIFFUSION DE FRANCE, 10, rue
d'Oradour sur Glane, F-75932 Paris Cédex 15(FR)**

(72) Inventeur: **Vigarie, Jean Pierre, 32 Rue des Tilleuls,
F-35510 Cesson Sevigne(FR)**
Inventeur: **Dehery, Yves François, 28 Rue V.Rault,
F-35000 Rennes(FR)**

(74) Mandataire: **Fort, Jacques et al, CABINET
PLASSERAUD 84, rue d'Amsterdam, F-75009 Paris(FR)**

## Description

L'invention concerne la transmission d'informations numériques dans une configuration de base conforme à l'une des normes C, D ou D2 MAC/PAQUETS, établies notamment en vue de la radiodiffusion directe par satellite, notamment de programmes de télévision, ainsi qu'en vue de tout système de transport de signaux numériques utilisant un protocole de transmission par paquets similaire. Cette famille de normes prévoit, lorsque celles-ci sont appliquées à la radiodiffusion directe par satellite ou à la distribution par câble ainsi qu'à la diffusion terrestre, deux niveaux de multiplexage des différents types d'informations à transmettre. Les informations numériques sont tout d'abord multiplexées par paquets, chaque paquet transportant des données appartenant à une seule composante de service. Le train numérique ainsi obtenu regroupe les informations relatives à des sons transmis sous forme numérique et aux données. Un second niveau de multiplexage donne naissance à un signal global comportant le train numérique et les informations relatives à l'image, ainsi que des informations de contrôle. Les normes permettent également de transmettre des informations numériques en pleine trame. On pourra trouver par exemple une description de la norme C-MAC/PAQUETS, dans laquelle la modulation du train numérique est effectuée par déplacement de phase de type MDP 2-4 dans l'article "Le système C-MAC/PAQUETS pour la télévision directe par satellite" de H. MERTENS et al, Revue de l'UER. Technique n° 200, Août 1983. Mais l'invention est également applicable aux autres normes telles que D ou D2-MAC/PAQUETS et, plus généralement, dans tous les cas où on utilise un train numérique structuré en paquets de manière similaire.

L'invention a plus particulièrement pour objet un dispositif, destiné notamment à être incorporé à un récepteur de démultiplexage de signal de radiodiffusion de type C, D ou D2-MAC/PAQUET, ou signal similaire, constitué par un signal comportant des trains successifs de données numériques réparties en paquets affectés à une ou plusieurs composantes différentes de services ayant chacune un en-tête contenant un numéro de voie. L'invention vise notamment à fournir un dispositif permettant d'extraire les paquets associés à une ou plusieurs composantes de service données et de les fournir sur une ou plusieurs sorties particulières.

Dans ce but l'invention propose notamment un dispositif de démultiplexage de paquets, provenant d'un signal comportant des trains successifs de données numériques structurées en paquets affectés à une ou plusieurs composantes de services différentes, chaque paquet ayant chacun un en-tête contenant un numéro de voie, ledit dispositif permettant d'extraire les paquets associés à une ou plusieurs composantes de services données et de les fournir sur des sorties particulières, caractérisé en ce qu'il comprend un circuit de génération de toutes les configurations correspondant au numéro de voie sélectionné, des moyens de codage desdites configurations suivant le code de protection contre les erreurs affectant le signal numérique transmis, permettant d'obtenir toutes les configurations codées théoriques d'en-tête correspondantes, des moyens de détermination des distances de Hamming entre l'en-tête reçu et les configurations d'en-têtes codées, et des moyens pour diriger vers un interface de sortie les paquets pour lesquels la distance de Hamming est inférieure ou égale à une valeur déterminée.

Dans la pratique, les sorties particulières peuvent être constituées soit par des liaisons individuelles, soit par des sorties virtuelles obtenues par autant de signaux de validation et une sortie de données unique.

Dans le cas prévu dans les normes C, D ou D2-MAC/PAQUETS, ou techniques similaires, où chaque en-tête contient un indice de continuité en plus du numéro de voie, le circuit de génération est prévu pour fournir les configurations d'en-tête correspondant à toutes les valeurs de l'indice de continuité pour un même numéro de voie sélectionné. Les moyens de détermination des distances de Hamming comportent avantageusement plusieurs corrélateurs séquentiels à un seul bit, en nombre égal à celui des configurations correspondant à un même numéro de voie, chaque défaut de corrélation étant utilisé pour incrémenter un compteur.

L'invention sera mieux comprise à la lecture de la description qui suit d'un mode particulier de réalisation donné à titre d'exemple non limitatif. La description se réfère aux dessins qui l'accompagnent, dans lesquels :

- la Figure 1 est un schéma montrant la structure d'une ligne suivant les normes C, D ou D2-MAC/PAQUETS ;
- la Figure 2 est un schéma de principe des étages d'un récepteur de radiodiffusion directe comportant un dispositif de démultiplexage permettant d'extraire les paquets concernant deux voies de service préalablement sélectionnées ;
- la Figure 3 est un schéma synoptique d'un dispositif de démultiplexage utilisable dans le récepteur de la Figure 2 ;
- la Figure 4 est un chronogramme montrant les signaux qui apparaissent aux entrées et sorties de l'interface de contrôle du récepteur de la Figure 2 ;
- la Figure 5 est un schéma synoptique d'un corrélateur 1 bit utilisable dans le dispositif de la Figure 3 ;
- la Figure 6 est un schéma synoptique d'une variante de réalisation du dispositif de la Figure 3.

Avant de décrire l'invention, on rappellera très brièvement la constitution du signal global de la configuration prévue par les normes C, D ou D2-MAC/PAQUET. Pour une description plus complète, on pourra se reporter aux documents mentionnés plus haut, ainsi qu'aux nombreuses publications concernant les configurations correspondant aux normes D-MAC/PAQUET et D2-MAC/PAQUET (en particulier le document édité par le Gouvernement français, intitulé "Spécifications du système D2-MAC/PAQUET", septembre 1985.

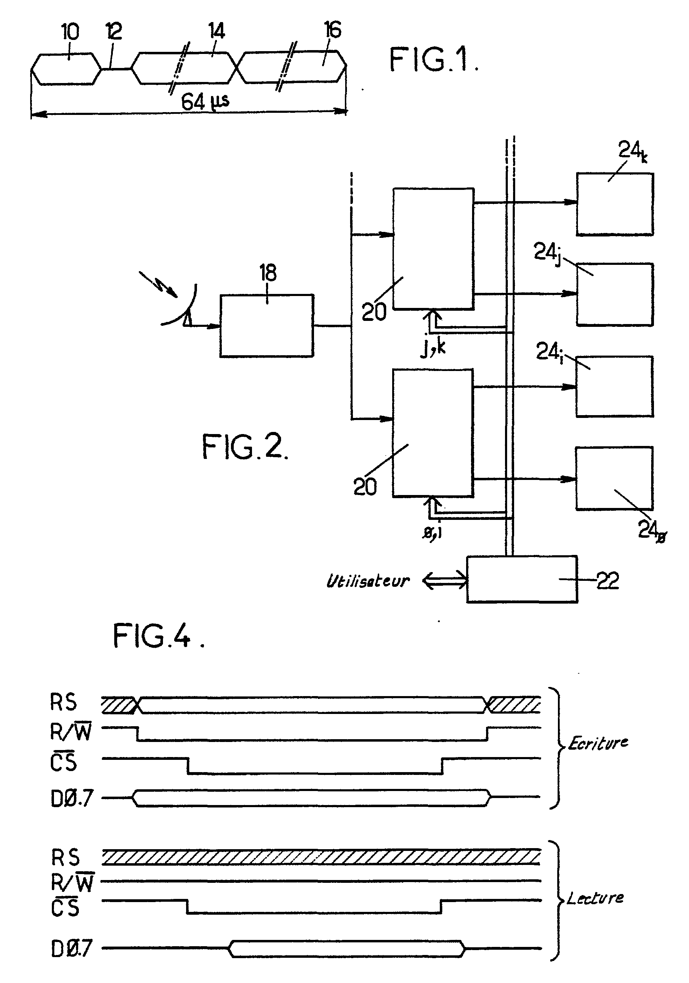

La trame de base de la Norme D2-MAC/PAQUETS par exemple comporte 625 lignes dont les deux dernières sont affectées à des informations de contrôle. Chaque ligne, d'une durée de 64 micro-secondes, a la constitution montrée en figure 1. Elle présente successivement une période affectée à une salve numérique 10, le niveau zéro 12 de la différence de couleur, une période 14 affectée au signal de chrominance et une période 16 affectée au signal de luminance.

La structure d'un paquet est la suivante :

**751 bits**

| 23 bits | 728 bits (91 octets) |
|---|---|

| EN-TETE | DONNEES |
|---|---|

| NUMERO DE VOIE | IC | SUFFIXE | DONNEES UTILES |
|---|---|---|---|

| 10 bits | 2 bits | 11 bits |
|---|---|---|

On voit que chaque paquet comporte un en-tête et des données utiles. L'en-tête comporte lui-même :
- un numéro de voie, pouvant aller de 0 à 1023, qui identifie les paquets d'une même composante de service et qui est reçu avec le bit de poids faible en premier ;
- un indice de continuité Ic, permettant de repérer une éventuelle perte de paquets ;
- un suffixe de 11 bits, qui protège les 12 bits constitués du numéro de voie et de l'indice de continuité.

Le suffixe est obtenu par un code de correction, généralement un code de Golay, permettant de corriger trois erreurs au maximum intervenues sur les 23 bits.

Pour un numéro de voie donné, un paquet peut avoir l'un quelconque de quatre en-têtes théoriques, correspondant aux quatre valeurs possibles de l'indice de continuité. Chacun de ces en-têtes est identifiable même en cas d'erreurs de transmission, si le nombre des erreurs est tel que la distance de Hamming entre l'en-tête codé théorique et l'en-tête réel ne dépasse pas 3.

Le récepteur dont les étages d'entrée sont montrés en figure 2 comprend un démodulateur 18 destiné à restituer le train numérique du signal reçu. Ce démodulateur peut avoir l'une des constitutions habituelles et n'est donc pas nécessaire de le décrire ici.

Le dispositif de démultiplexage reçoit le train numérique structuré en paquets fourni par le démodulateur 18. Il permet d'extraire les paquets associés à une ou plusieurs composantes de services présélectionnées et fournit les données ainsi prélevées à des modules de traitement spécialisés. Dans le mode de réalisation montré en figure 2, ce dispositif de démultiplexage est constitué de plusieurs circuits intégrés distincts 20, capables chacun de traiter simultanément deux composantes de services distinctes. Ce mode de réalisation n'est évidemment pas exclusif et des simplifications ou des généralisations permettent de traiter un nombre différent de composantes de service à la fois. Enfin, une unité de gestion du récepteur 22 est associée au dispositif de démultiplexage et lui fournit les numéros de voies à sélectionner. A titre d'exemple, on a montré sur la figure 2 quatre modules de traitement $24_0$, $24_i$, $24_j$ et $24_k$ qui sont par exemple affectés à l'identification des services, au contrôle d'accès, au décodage des sous-titres et au

3

décodage d'une composante sonore. Les paquets des voies 0, i, j, k seront ainsi adressés respectivement aux modules $24_0$ à $24_k$.

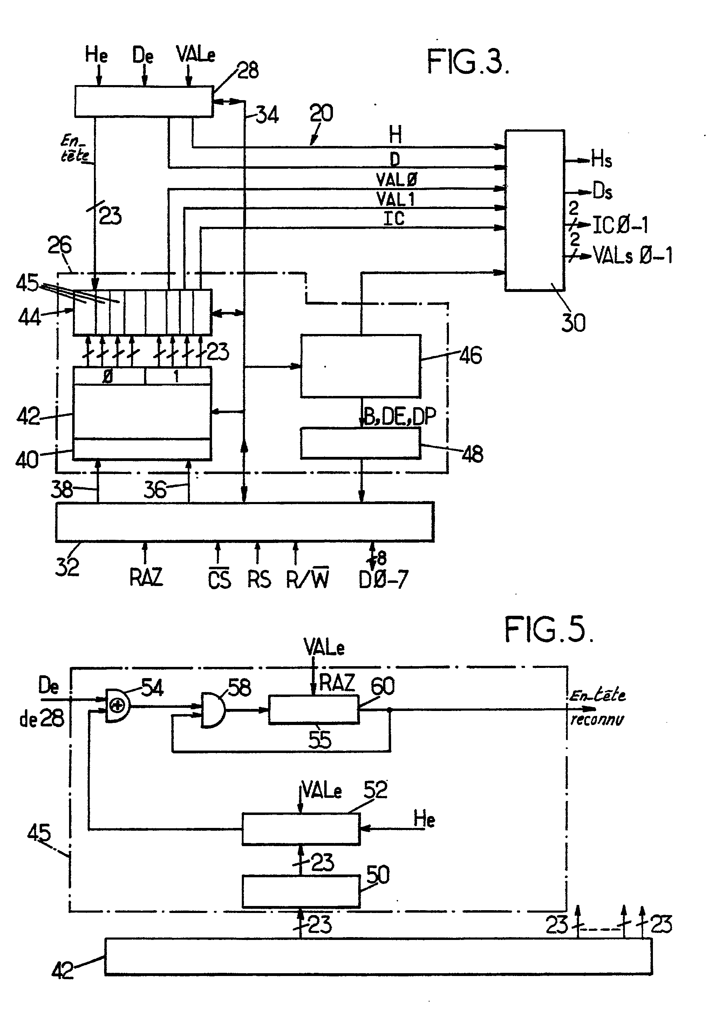

Chacun des circuits intégrés de démultiplexage 20 peut avoir la constitution montrée en figure 3. Il peut être regardé comme ayant un circuit d'extraction 26, un interface d'entrée 28, un interface de sortie 30 et un interface de contrôle 32.

Les interfaces 28 et 30 ont essentiellement un rôle d'adaptation. Ils peuvent être constitués en technologie TTL et on décrira leur fonctionnement en logique positive.

L'interface d'entrée 28 comporte trois entrées destinées à recevoir respectivement les signaux :
He, constitué par l'horloge binaire du train d'éléments binaires (bits) du signal fourni par le démodulateur,
De, donnée entrante,
VALe, validation de l'en-tête, actif à l'état haut durant les vingt-trois premiers bits du paquet, correspondant à l'en-tête.

Cet interface transfère le signal d'horloge H et le signal de données D directement à l'interface de sortie 30. Il oriente l'en-tête, c'est-à-dire les bits reçus alors que VALe est à l'état haut, vers le circuit d'extraction 26.

L'interface de sortie 30 assure la liaison avec les modules de traitement 24 associés indiqués à la Figure 2. L'interface de sortie 30 est de type série et il est prévu pur fournir les signaux :
Hs, horloge bit du train binaire série sortant : l'horloge étant continue et présente même en l'absence des autres signaux à la sortie de l'interface 30.
Ds, signal de données : ce signal est constitué par les 728 bits de données de chaque paquet dont l'en-tête est reconnu comme correspondant à l'une des composantes de services à extraire. Ces 728 bits sortent dans l'ordre où ils sont reçus, les 23 bits de l'en-tête n'étant pas restitués.
VALs 0-1 : Chacune de ces deux sorties correspond à un numéro de voie identifié et est active, c'est-à-dire à l'état haut, durant l'émission des 728 bits de données d'un paquet sortant reconnu.
IC0-1, indice de continuité, IC0 étant le bit de poids faible.

Les deux signaux IC0 et IC1 sont activés pour chaque paquet par le circuit d'extraction qui a identifié le numéro de voie reçu. Le numéro de la voie concerné par les données fournies sur Ds et ICo.1 est identifié par celle des deux sorties VALs 0-1 qui est active, c'est-à-dire au niveau haut.

L'interface de sortie 30 reçoit l'horloge H et les données D de l'interface d'entrée 28, comme cela a déjà été indiqué. Il reçoit des signaux de validation $VAL_0$ et $VAL_1$ et l'indice de continuité du circuit d'extraction, comme on le verra plus bas.

L'interface de contrôle 32 est prévu pour commander les circuits de démultiplexage et examiner leur fonctionnement. Etant donné que chaque circuit de démultiplexage est prévu pour traiter simultanément deux numéros de voie distincts, chaque numéro de voie est fourni au circuit sous forme de deux octets contenant l'indice de voie (un parmi deux) et le numéro de voie (un parmi mille vingt-quatre). Le doublet formé par les deux octets comporte également un bit permettant de bloquer à volonté l'une des sorties du circuit de démultiplexage, indépendamment de l'autre. Le doublet peut notamment avoir, à l'entrée du circuit d'extraction 26, la forme suivante :

```
       Octet de poids fort              Octet de poids faible

    ┌──────────────────────────┐     ┌──────────────────────────┐

    ┌──────────────────────────┐     ┌──────────────────────────┐
    │ 7  6  5  4  3  2  1  0 │      │ 7  6  5  4  3  2  1  0 │
    └──────────────────────────┘     └──────────────────────────┘

    ┌──┐
    │Ind.│
    │de  │  0  0  0  0  B ◄──────── numéro de voie ──────────►
    │voie│
```

L'indice de voie peut prendre les valeurs 0 et 1, pour désigner respectivement la première et la seconde voie. Le bit B permet de bloquer la sortie définie par l'indice de voie s'il est égal à 1 et, dans ce cas, le numéro de voie est ignoré. Enfin, dix bits sont utilisés pour fournir le numéro de voie, codé en binaire pur.

L'interface 32 sera en règle générale un interface parallèle de type microprocesseur, permettant de charger, dans le circuit intégré de démultiplexage auquel il appartient, un mot de commande contenant un numéro de voie (ligne 36) ou un ordre de blocage, et un indice de voie (ligne 38). Inversement, l'interface 32 doit être capable de lire le mot d'état 48 du circuit intégré de démultiplexage 20.

En conséquence, l'interface 20 comportera les entrées :
/RAZ, destinée à recevoir le signal d'initialisation, active à l'état bas,

/CS : sélection du circuit intégré, active à l'état bas,

RS : entrée d'écriture dans le circuit intégré (cette entrée étant ignorée lors du fonctionnement en lecture). Les états bas et haut de cette entrée désignent respectivement la partie basse et la partie haute du doublet qui fournit l'indice de voie et le numéro de voie, transmis par les lignes de sortie 38 et 36.

R/W̄: entrée de lecture et d'écriture, qui définit le sens du bus de données 34 reliant les interfaces. Lorsque l'entrée R/W̄: est à l'état haut, les données sortent du circuit intégré de démultiplexage 20. A l'état bas, les données sont transférées vers ce circuit 20.

D0-7 : Ces lignes sont bidirectionnelles et permettent le transfert de données sous forme d'octets ; elles sont à l'état haute impédance quand le circuit intégré de démultiplexage correspondant 20 n'est pas sélectionné.

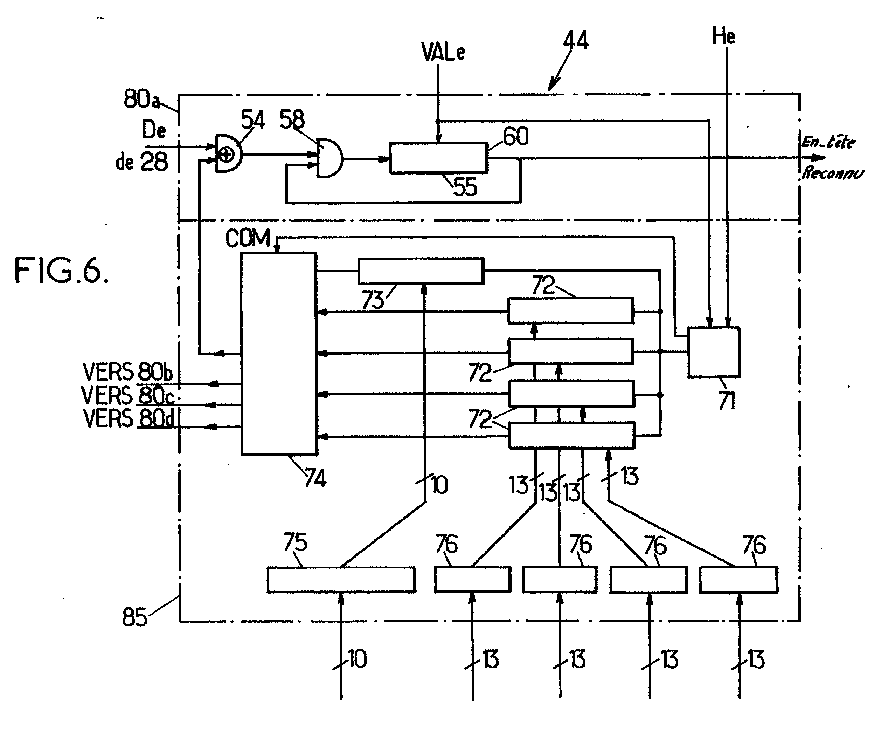

Un tel interface 32 peut être réalisé à partir d'un microprocesseur et présenter un temps de réponse de l'ordre de celui d'une mémoire classique ou d'un circuit périphérique de microprocesseur. Son chronogramme de fonctionnement peut être celui donné en Figure 4.

On voit que, lors de l'écriture, un numéro de voie est fourni au circuit 20 par l'interface de contrôle 32 sous forme d'un doublet, alors que le bit de blocage B est à zéro. Le doublet est introduit en deux cycles d'écriture. Pendant que RS = 0, on fournit au circuit l'octet de poids faible du doublet. Puis, pour RS = 1, on fournit au circuit l'octet de poids fort du doublet.

En lecture, les lignes D0-7 reçoivent de l'interface de contrôle les octets lus dans le circuit intégré.

Le circuit d'extraction 26 communique avec les interfaces 28 et 32 par le bus 34 et communique avec l'ensemble des interfaces par des lignes supplémentaires qui seront mentionnées plus loin. Il comprend tout d'abord des moyens permettant de reconnaître toutes les configurations d'en-tête correspondant à un service donné, identifié par un numéro de voie.

Pour cela, le circuit d'extraction 26 comprend des moyens permettant de générer tous les types d'entêtes (correspondant aux quatre configurations possibles de l'indice de continuité) et d'analyser l'en-tête de chaque paquet reçu afin de valider uniquement les paquets correspondant à une composante de service.

Dans le mode de réalisation montré en Figure 3, ces moyens comprennent un générateur 40 qui élabore, à partir du numéro de voie, fourni par les lignes 36 et 38, les quatre configurations de douze bits possibles, suivant la valeur prise par l'indice de continuité. Les quatre configurations sont fournies à un codeur 42 qui détermine, par application du polynôme générateur choisi, les quatre configurations codées correspondantes.

Dans le mode de réalisation illustré, le circuit d'extraction 26 est capable de traiter simultanément deux numéros de voie distincts, de sorte que le générateur et le codeur doivent être capables de fournir, sous forme de deux groupes distincts 0 et 1, huit configurations codées théoriques sous forme chacune d'un mot de vingt-trois bits.

Les mots ainsi générés sont appliqués sur les entrées de référence d'un circuit de reconnaissance 44. Ce circuit est susceptible d'avoir diverses configurations. On décrira plus tard, en faisant référence à la Figure 5 et à la Figure 6, une configuration qui semble particulièrement intéressante. Mais il suffit que le circuit de reconnaissance 44 soit capable de déterminer les quatre distances de Hamming entre l'en-tête reçu et les quatre en-têtes codés théoriques et de valider le paquet si au moins une des quatre distances $\underline{d}$ ainsi obtenues est inférieure ou égale à 3. En cas d'identification, le circuit de reconnaissance émet, vers l'interface de sortie 30, un signal de validation VAL0 ou VAL1, suivant le groupe intéressé, et un signal IC fournissant l'indice de continuité d'après la configuration provenant du codeur qui a été trouvée la plus proche de l'en-tête reçu.

A réception de ces signaux, l'inteface 30 fournit le signal de sortie approprié VALs0 ou VALs1, suivant le cas, ainsi que les signaux Ds et IC0-1.

Le circuit d'extraction 26 comprend encore une logique de contrôle 46 qui peut être constituée par un automate d'état, reliée au bus 34 de façon à recevoir les informations qui y circulent. La logique est prévue pour élaborer un mot d'état interne représentatif de l'état du système, qui est communiqué à l'interface de contrôle 32. Sur la Figure 3, ce mot est représenté stocké dans un réseau de bascules 48.

Dans le cas où le circuit intégré est prévu pour traiter simultanément deux numéros de voie distincts, la logique 46 fournira un mot d'état interne constitué de deux groupes (affectés chacun à un indice de voie) de trois bits B, DE, DP.

Le bit B est le bit de blocage déjà mentionné, qui indique que la sortie associée du circuit intégré est à l'état bloqué lorsqu'il est à l'état 1.

Le bit DE (défaut d'en-tête) indique, lorsqu'il est à l'état 1, que le circuit de reconnaissance 44 a détecté un en-tête dont la longueur n'est pas de vingt-trois bits.

Le bit DP (défaut paquet) indique, lorsqu'il est à l'état 1, qu'un paquet reçu a une longueur inférieure à sept cent cinquante et un bits, cette anomalie étant détectée par une montée prématurée au niveau 1 du signal VALe.

La logique ne peut évidemment fournir la valeur des bits DE et DP qu'à la fin du traitement du paquet qui est à l'origine de l'anomalie. Le réseau de bascules 48 maintiendra les deux bits à la même valeur jusqu'à la fin du paquet suivant. Le mot d'état est transmis sur les orties D0-7 de l'interface 32 au cours d'un cycle de lecture (partie basse de la Figure 4), selon un format qui peut être le suivant :

| 7 | 6 | 5 | 4 | 3 | 2 | 1 | 0 |
|---|---|---|---|---|---|---|---|
| 0 | DE | DP | B | 0 | DE | DP | B |

Indice = 1        Indice = 0

Le circuit de reconnaissance 44 peut avantageusement avoir la constitution montrée en Figure 5, qui utilise un corrélateur 1 bit comme élément essentiel d'identification.

Le corrélateur montré en Figure 5 comporte un registre à décalage 52 ayant une capacité de vingt-trois bits. Les entrées de chargement parallèle du registre sont reliées à un automate de calcul et de mémorisation d'en-tête 50 qui permet de charger initialement dans le registre une configuration de référence de vingt-trois bits, calculée par le codeur 42 à partir du numéro de voie approprié et d'un des indices de continuité. Le registre 52 reçoit sur son entrée de décalage le signal d'horloge He, de façon que son contenu se décale à chaque bit entrant de l'en-tête d'un paquet. Le chargement initial du registre est commandé par le signal VALe appliqué sur l'entrée de commande.

Chaque bit de donnée DE entrant est comparé au bit présent en sortie du registre à décalage 52 dans une porte OU EXCLUSIF 54. La sortie de la porte 54 est appliquée à l'entrée d'incrémentation d'un compteur modulo 4, 55, par l'intermédiaire d'une porte ET 58 rebouclant la sortie du compteur sur son entrée. Le compteur 55 comporte une entrée de remise à zéro qui reçoit le signal VALe, de façon qu'à chaque début d'en-tête le compteur soit remis à zéro. La sortie de débordement 60 du compteur 55 est activée dès que le comptage dépasse la valeur 3. Du fait de la présence de la porte 58, l'activation de la sortie de débordement bloque le compteur à la valeur atteinte jusqu'à la remise à zéro suivante et indique que l'en-tête reçu n'est pas reconnu comme correspondant à la configuration chargée dans le registre à décalage.

Le circuit de reconnaissance doit comporter un nombre de corrélateurs égal à celui des configurations possibles, tous les corrélateurs fonctionnant en parallèle. En conséquence, le résultat de la corrélation est disponible au plus tard après une durée d'un bit au-delà de la réception du vingt-troisième bit d'en-tête. Deux corrélateurs ne peuvent pas reconnaître ensemble le même en-tête du fait que les mots du code de Golay ont une distance mutuelle de sept alors que la tolérance sur la reconnaissance n'est que de trois.

Le circuit de reconnaissance 44 de la Figure 5 comporte, dans le cas particulier envisagé plus haut, huit corrélateurs à un seul bit impliquant huit registres à décalage 52 de vingt-trois bits correspondant aux huit en-têtes de référence.

La Figure 6 montre une variante de réalisation du circuit 44 permettant d'utiliser seulement deux registres à décalage de vingt-trois bits et huit registres à décalage de treize bits (deux bits d'indice de continuité et onze bits de suffixe de protection propre à chaque configuration). Cette variante, qui permet également de réduire la taille des registres de mémorisation d'en-têtes 50, réduit le nombre de points mémoire requis, donc la taille du circuit intégré.

Le module 44 montré en Figure 6 peut être regardé comme comportant huit corrélateurs séquentiels proprement dits 80 et deux sous-modules 85.

Chaque sous-module 85 comporte, pour une voie, un registre à décalage commun de dix bits 73 contenant le numéro de voie, quatre registres à décalage particuliers 72 de chacun treize bits contenant les indices de continuité et les suffixes de protection et un système de décalage séquentiel. Ce système se compose d'un organe de séquencement 71 et d'une logique de distribution 74. L'organe de séquencement 71 reçoit les signaux He et VALe et fournit un signal de séquencement COM à la logique de distribution 74. La logique 74 alimente les quatre corrélateurs séquentiels 80a, 80b, 80c et 80d (dont un seul, 80a, est représenté) pendant les dix premières séquences avec les bits provenant du registre 73 puis, pendant les treize séquences suivantes, avec les bits provenant des quatre registres 72. Le signal COM provenant de l'organe de séquencement 71 enchaîne le décalage des registres 72 et 73.

Le sous-module 85 comprend encore quatre registres particuliers 76 de chacun treize bits, destinés à mémoriser les indices de continuité et les suffixes de protection, ainsi qu'un registre commun 75 à dix bits de mémorisation du numéro de voie.

Chacun des corrélateurs séquentiels 80 comprend, comme les corrélateurs de la Figure 5, une porte OU EXCLUSIF 54, une porte ET 58 de rebouclage et une compteur 55 à débordement dès que son contenu dépasse la valeur 3.

## Revendications

1. Dispositif de démultiplexage de paquets, provenant d'un signal, notamment d'un signal conforme à l'une des Normes C, D ou D2-MAC/Paquet, comportant des trains successifs de données numériques structurées en paquets affectés à une ou plusieurs composantes de services différentes, chaque paquet ayant chacun un en-tête contenant un numéro de voie correspondant à une composante de service particulière et un code de protection de l'en-tête contre les erreurs, ledit dispositif permettant d'extraire les paquets associés à une ou plusieurs composantes de services données et de les fournir sur une ou des sorties respectives particulières, caractérisé en ce qu'il comprend un circuit (40) de génération de toutes les configurations contenant un numéro de voie sélectionné, des moyens de codage (42) desdites configurations suivant le code de protection contre les erreurs permettant d'obtenir toutes les configurations codées théoriques d'en-tête correspondantes, des moyens (44) de détermination des distances de Hamming entre l'en-tête reçu et les configurations d'en-têtes codées, et des moyens (46) pur diriger vers un interface de sortie (30) les paquets pour lesquels la distance de Hamming est inférieure ou égale à une valeur déterminée.

2. Dispositif selon la revendication 1, caractérisé en ce que les sorties particulières sont constituées soit par des liaisons individuelles, soit par des sorties virtuelles obtenues par autant de signaux de validation que de sorties particulières et une sortie de données unique.

3. Dispositif selon la revendication 1 ou 2, caractérisé en ce que, chaque en-tête contenant un indice de continuité en plus du numéro de voie, le circuit de génération (40) est prévu pour fournir les configurations d'en-têtes correspondant à toutes les valeurs de l'indice de continuité (IC) pour un même numéro de voie sélectionné.

4. Dispositif selon la revendication 1, 2 ou 3, caractérisé en ce que les moyens de détermination des distances de Hamming comportent plusieurs corrélateurs séquentiels à un seul bit, en nombre égal à celui des configurations correspondant à un même numéro de voie, chaque défaut de corrélation étant utilisé pour incrémenter un compteur particulier associé à chacun des corrélateurs.

5. Dispositif selon la revendication 4, caractérisé en ce que le compteur particulier associé à chaque corrélateur comporte un moyen de mémorisation de son débordement, débordement qui est atteint quand la distance de Hamming est supérieure à la valeur déterminée.

6. Dispositif selon la revendication 4 ou 5, caractérisé en ce que chacun des corrélateurs séquentiels comprend : un registre à décalage (52) ; des moyens pour charger, dans le registre à décalage, une configuration différente parmi toutes les configurations d'en-têtes codés correspondant au numéro de voie sélectionné ; des moyens pour avancer le contenu du registre (52) à la cadence d'arrivée de bits du signal ; une porte OU EXCLUSIF (54) recevant simultanément le bit de sortie du registre (52) et le bit correspondant d'en-tête, le compteur (60) qui est associé à chaque corrélateur recevant la sortie de la porte OU EXCLUSIF sur son entrée d'incrémentation.

7. Dispositif selon la revendication 6, caractérisé en ce que la taille de l'ensemble des registres à décalage relatifs à un même numéro de voie est réduite en remplaçant cet ensemble par :
- un nombre égal de registres particuliers (72) de mémorisation des indices de continuité et des suffixes de protection ;
- un registre commun (73) de mémorisation du numéro de voie ;
- un système de décalage séquentiel (71, 73).

## Claims

1. Device for demultiplexing packets originating from a signal, particularly a signal according to one of the C, D or D2-MAC/packet Standards, comprising successive bursts of digital data distributed into packets dedicated to one or more different service components, each packet having a header containing a channel number corresponding to a specific service component and a code for protecting the header against errors, said device permitting to extract the packets which are associated with one or more given service components and to deliver them on one or more specific respective outputs, characterized in that it comprises a circuit (40) for generating all possible configurations containing a selected channel number, means (42) for encoding said configurations according to the code for protection against errors, making it possible to obtain all respective theoretical coded header configurations, means (44) for computing the Hamming distances between the incoming header and the coded header configurations, and means for directing those packets for which the Hamming distance is not greater than a predetermined value to an output interface (30).

2. Device according to claim 1, characterized in that the dedicated outputs consist either of individual connections, or of virtual outputs obtained by as many validation signals as there are specific outputs and one data output.

3. Device according to claim 1 or 2, characterized in that, each header containing the continuity index in addition to the channel number, the generation circuit (40) is arranged for delivering all header configurations corresponding to all values of the continuity index (IC) for a same selected channel number.

4. Device according to claim 1, 2 or 3, characterized in that the means for computing the Hamming distances comprise as many one-bit sequential correlators as there are configurations corresponding to a same channel number, each correlation failure being used for incrementing a specific computer associated to each of the correlators.

5. Device according to claim 4, characterized in that the specific counter associated with each correlator comprises means for storing overflow thereof, such overflow being attained when the Hamming distance is higher than the predetermined value.

6. Device according to claim 4 or 5, characterized in that each of the sequential correlators comprises: a shift register (52); means for loading a particular one among all the coded header configurations corresponding to the selected channel number into the shift register; means for shifting the content of the register (52) forward at the delivery rate of bits on the channel; an XOR gate (54) connected to simultaneously receive the output bit of the register (52) and the respective header bit, the counter (60) which is associated to each correlator receiving the output of the XOR gate on its up-counting input.

7. Device according to claim 6, characterized in that the size of the set of shift registers associated with a same channel number is reduced by substituting said set with:
   - an equal number of specific registers (72) for storing the continuity indices and protection suffices;
   - a common register (73) for storing the channel number;
   - a sequential shift system (71, 73).

## Patentansprüche

1. Vorrichtung zum Demultiplexieren von Datenpaketen eines Signals, insbesondere eines Signals gemäß den MAC-Paketennormen C, D oder D 2, das eine fortwährende Folge von in Paketen angeordneten numerischen Daten umfaßt, die einer oder mehreren verschiedenen Betriebskomponenten zugeordnet sind, wobei jedes Paket jeweils einen Kopf aufweist, der eine einer bestimmten Betriebskomponente entsprechende Kanalnummer und einen Fehlersicherungscode enthält, und wobei die genannte Vorrichtung es erlaubt, die einer oder mehreren Datenbetriebskomponenten zugeordneten Pakete auszulesen und sie einem oder den jeweiligen besonderen Ausgängen zuzuführen, dadurch gekennzeichnet, daß sie eine Schaltung (40) zur Erzeugung aller eine gewählte Kanalnummer enthaltenden Konfigurationen, eine Einrichtung (42) zur Codierung der genannten Konfigurationen gemäß dem Fehlersicherungscode, welche es erlaubt, alle codierten, theoretischen Konfigurationen des entsprechenden Kopfes zu erhalten, eine Einrichtung (44) zur Bestimmung der Hamming-Abstände zwischen dem empfangenen Kopf und den codierten Konfigurationen der Köpfe und eine Einrichtung (46) umfaßt, um die Pakete, deren Hamming Abstand kleiner oder gleich einem bestimmten Wert ist, zu einer Ausgangsschnittstelle (30) zu leiten.

2. Vorrichtung nach Anspruch 1, dadurch gekennzeichnet, daß die besonderen Ausgänge entweder durch einzelne Verbindungen gebildet werden oder durch virtuelle Ausgänge, die man durch ebenso viele Freigabesignale erhält, wie es Einzelausgänge gibt, und einen einzigen Datenausgang.

3. Vorrichtung nach Anspruch 1 oder 2, dadurch gekennzeichnet, daß jeder Kopf zusätzlich zur Kanalnummer einen Kontinuitätsindex enthält, und daß die Erzeugungsschaltung (40) dafür vorgesehen ist, die Konfigurationen der Köpfe entsprechend allen Werten des Kontinuitätsindex (IC) für eine gleiche gewählte Kanalnummer zu liefern.

4. Vorrichtung nach Anspruch 1, 2 oder 3, dadurch gekennzeichnet, daß die Einrichtung zur Bestimmung der Hamming-Abstände mehrere sequentiel einem einzigen Bit entsprechende Korrelatoren umfaßt in gleicher Anzahl wie die einer gleichen Kanalnummer entsprechenden Konfigurationen, wobei jeder Korrelationsfehler dazu verwendet wird, einen besonderen mit jedem Korrelator verbundenen, besonderen Zähler zu inkrementieren.

5. Vorrichtung nach Anspruch 4, dadurch gekennzeichnet, daß der besondere mit jedem Korrelator verbundene Zähler eine Einrichtung zum Speichern seines Überlaufes umfaßt, wobei dieser Überlauf erreicht wird, wenn der Hamming-Abstand über dem bestimmten Wert liegt.

6. Vorrichtung nach Anspruch 4 oder 5, dadurch gekennzeichnet, daß jeder der sequentiellen Korrelatoren umfaßt: ein Schieberegister (52); eine Einrichtung, um in das Schieberegister eine von allen Konfigurationen der gemäß der gewählten Kanalnummer codierten Köpfe sich unterscheidende Konfiguration zu laden; eine Einrichtung, um den Inhalt des Registers (52) im Takt des Eintretens von Bits des Signals vorzuschieben; ein exklusives ODER-GLIED (54), welches gleichzeitig das Ausgangs-Bit des Registers (52) und das entsprechende Bit des Kopfes empfängt, wobei der mit jedem Korrelator verbundene Zähler (60) die Ausgabe des exklusiven ODER-GLIEDS auf seinem Inkrementeneingang empfängt.

7. Vorrichtung nach Anspruch 6, dadurch gekennzeichnet, daß die Größe der Gesamtheit der sich auf eine gleiche Kanalnummer beziehenden Schieberegister verringert wird, indem diese Gesamtheit ersetzt wird durch
   – eine gleiche Anzahl von besonderen Registern (72) zum Speichern der Kontinuitätsindices und der Sicherungssuffixe;
   – ein gemeinsames Register (73) zum Speichern der Kanalnummer; und
   – ein sequentielles Schiebesystem (71, 73).

FIG.1.

FIG.2.

FIG.4.

FIG.3.

FIG.5.

FIG.6.

EP 0 238 382 B1